# EUROPÄISCHE PATENTSCHRIFT

(11) **EP 0 567 773 B1**
(45) Veröffentlichungstag und Bekanntmachung des Hinweises auf die Patenterteilung: **10.12.1997**
(21) Anmeldenummer: 93104810.2
(22) Anmeldetag: 24.03.1993
(51) Int. Cl.: H02B 7/00

(54) **Mehrphasiges Schaltsystem und Generatornordnung mit einem solchen Schaltsystem**
Multiphase switching system and generator system with the same
Système de commutation polyphasé et système générateur avec celui-ci

(30) Priorität: 28.04.1992 CH 1371/92
(43) Veröffentlichungstag der Anmeldung: 03.11.1993
(73) Patentinhaber: ASEA BROWN BOVERI AG, 5400 Baden (CH)
(72) Erfinder: Widenhorn, Leonhard, CH-6300 Zug (CH)
(74) Vertreter: Kaiser, Helmut, Dr.

(56) Entgegenhaltungen:
- DE-A- 1 910 871
- DE-U- 1 897 979
- FR-A- 2 548 473

## Beschreibung

### TECHNISCHES GEBIET

Bei der Erfindung wird ausgegangen von einem mehrphasigen Schaltsystem, bei dem jeder der Phasenleiter im Zuge einer zwischen einem Generator und einem Netztransformator angeordneten Generatorableitung gemeinsam mit einem ersten Schaltgerät oder einer ersten Schaltgerätekombination von den übrigen Phasenleitern phasenisoliert in einer Kapselung angeordnet ist.

### STAND DER TECHNIK

Die Erfindung nimmt dabei Bezug auf einen Stand der Technik, wie er sich beispielsweise aus der DE-C2-33 29 404 ergibt. In dieser Patentveröffentlichung ist ein im Zuge einer Generatorableitung eingebautes mehrphasiges Schaltsystem beschrieben, bei dem jeder der Phasenleiter mit jeweils einem Generatorschalter, einem Erdungsschalter und einem Stromwandler auf der Zylinderachse angeordnet in eine zylinderförmige Metallkapselung eingebaut ist. Für das Ausführen bestimmter Schaltfunktionen, wie sie etwa beim Anfahren und/oder Bremsen des Generators einer ein solches Schaltsystem enthaltenden Generatoranordnung ausgeführt werden, benötigt dieses Schaltsystem noch zusätzliche, ausserhalb der Kapselungen angeordnete Lasttrennschalter, Trennschalter und/oder Mess- und Schutzkomponenten.

Eine Generatoranordnung mit einer Vorrichtung zum Anfahren des in einer Gasturbinenanlage vorgesehenen Generators ist beispielsweise aus Fig.10 der von der Anmelderin herausgegebenen Druckschrift Combined-Cycle Power Plants Series KA 11 und KA 13, Publication No. CH-KW 2009 E bekannt. Diese Generatoranordnung benötigt neben einem einen Generatorschalter enthaltendem Schaltsystem einen Trenn- oder Lasttrennschalter, über den der in einem Frequenzumrichter angepasste Anfahrstrom dem Generator zugeführt wird.

### KURZE DARSTELLUNG DER ERFINDUNG

Der Erfindung, wie sie in Patentanspruch 1 definiert ist, liegt die Aufgabe zugrunde, ein Schaltsystem der eingangs genannten Art derart weiterzubilden, dass es trotz kompakter, raumsparender und phasenisolierter Bauweise nahezu alle in einer Generatoranordnung anfallende Schalt-, Schutz- und Messfunktionen ausführen kann. Aufgabe der Erfindung ist es gleichzeitig, eine ein solches Schaltsystem enthaltende Generatoranordnung anzugeben, bei der das Anfahren des Generators in besonders sicherer und kostensparender Weise erreicht wird.

Das Schaltsystem nach der Erfindung zeichnet sich dadurch aus, dass es bereits im Werk als versandfertiges, alle Schalt-, Schutz- und Messfunktionen, die in einer Generatoranordnung gewährleistet sein müssen, erfüllendes Bauteil hergestellt und geprüft werden kann. An der Baustelle kann das erfindungsgemässe Schaltsystem in äusserst einfacher Weise und zwar im wesentlichen lediglich durch Anschluss der Phasenleiter und durch Einschweissen der Kapselung in die Ableitung des Generators integriert werden. Das Schaltsystem kann leicht transportiert werden, da die einzelnen Phasen als kompakte Kapselungen ausgebildet sind und leicht auf einen allen Phasen gemeinsamen Tragrahmen montiert werden können. Die einzelnen Kapselungen sind voneinander durch Luftstrecken getrennt, so dass das Schaltsystem und die zu schützende Generatoranordnung bestmöglich gegen Fehlerströme gesichert ist. Der volle Kapselungsrückstrom fliesst über die Kapselung des Schaltsystems. Unerwünschte magnetische Leckfelder in der Umgebung des Schaltsystems werden so wesentlich reduziert.

Bei der ein solches Schaltsystem enthaltenden Generatoranordnung kann ein zwischen dem Generator und einer Anfahrvorrichtung vorgesehener Trenn- oder Lasttrennschalter eingespart werden, da das im Zuge der Generatorableitung vorgesehene Schaltgerät sowohl die Verbindung vom Generator zum Netz als auch alternativ die Verbindung vom Generator zur Anfahrvorrichtung herstellen kann. Besonders vorteilhaft wirkt die Generatoranordnung dann, wenn zwischen dem Generator und dem Schaltgerät ein Generatorschalter vorgesehen ist, da dann der von der Anfahrvorrichtung beim Anfahren zum Generator geführte und der vom Generator beim Bremsen abgegebene Strom nun unmittelbar vom Generatorschalter geschaltet wird. Hierbei wirkt der für den Dauerbetrieb des Generators vorgesehene, den Generatorschalter als zentrale Komponente aufweisende Schutz beim Anfahren und/oder Bremsen des Generators auch in dem die Anfahr-und/oder eine Bremsvorrichtung enthaltenden Stromkreis. Die Anfahr-und/oder Bremsvorrichtung ist daher ohne zusätzlichen Aufwand vor unzulässigen Betriebsweisen und Kurzschlusseinspeisungen durch den Generatorschalter geschützt.

Ausführungsbeispiele der Erfindung und die damit erzielbaren Vorteile werden nachfolgend anhand von Zeichnungen näher erläutert.

### KURZE BESCHREIBUNG DER ZEICHNUNG

In der Zeichnung ist ein bevorzugtes Ausführungsbeispiel der Erfindung schematisch dargestellt. Hierbei zeigt:
- Fig 1.: in perspektivischer Darstellung eine Ansicht einer ersten Ausführungsform eines mehrphasigen Schaltsystems nach der Erfindung,
- Fig.2: ein stark vereinfacht und lediglich einphasig dargestelltes Schaltbild einer Generatoranordnung mit dem Schaltsystem nach Fig.1 und mit einer Vorrichtung zum Anfahren des Generators,
- Fig.3: ein stark vereinfacht und lediglich einphasig dargestelltes Schaltbild einer Generatoranordnung mit einer zweiten Ausführungsform des Schaltsystems nach der Erfindung und mit einer Vorrichtung zum Anfahren des Generators, und
- Fig.4: ein stark vereinfacht und lediglich einphasig dargestelltes Schaltbild einer Generatoranordnung mit einer dritten Ausführungsform des Schaltsystems nach der Erfindung und mit einer Vorrichtung zum Anfahren des Generators.

### WEGE ZUR AUSFÜHRUNG DER ERFINDUNG

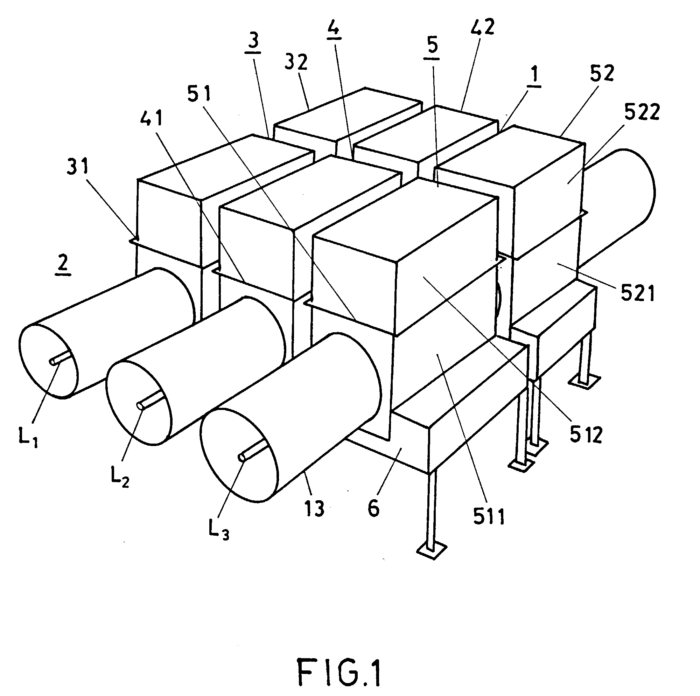

In allen Figuren beziehen sich gleiche Bezugszeichen auch auf gleichwirkende Teile. Das in Fig.1 dargestellte Schaltsystem 1 kann im Zuge einer Generatorableitung 2 zwischen einem nicht dargestellten Generator und einem ebenfalls nicht dargestellten Transformator eines elektrischen Energieversorgungs- und/oder Verteilnetzes eingebaut sein. Das Schaltsystem enthält drei, gegebenenfalls aber auch mehr, parallel zueinander ausgerichtete, metallisch leitende und der Rückstromführung dienende Kapselungen 3, 4, 5, welche jeweils je einen von drei in der Generatorableitung 2 vorgesehenen Phasenleitern L₁, L₂ und L₃ aufnehmen. Jede der Kapselungen 3, 4, 5 ist jeweils aus zwei in Zuge eines Phasenleiters L₁, L₂, L₃ angeordneten, kastenförmig ausgebildeten Kapselungselementen 31, 32; 41, 42; 51, 52 aufgebaut.

Generatorseitig angeordnete Kapselungselemente 31, 41, 51 bilden ein erstes Teilschaltsystem und enthalten jeweils mindestens einen Generatorschalter sowie gegebenenfalls ein weiteres Schaltgerät, wie einen Erdungsschalter und/oder einen Trennschalter, sowie Zusatzkomponenten, wie Strom- und Spannungswandler und/oder andere Sensoren, Ableiter und/oder Kondensatoren zum Schutz eines oder mehrerer Transformatoren.

Transformatorseitig angeordnete Kapselungselemente 32, 42, 52 bilden ein zweites Teilschaltsystem und enthalten jeweils ein weiteres Schaltgerät oder eine Schaltgerätekombination mit mindestens zwei Schaltstellen sowie gegebenenfalls ebenfalls weitere Schaltgeräte und/oder weitere Zusatzkomponenten, wie Strom- und Spannungswandler, Ableiter und/oder Schutzkondensatoren.

Gegebenenfalls können die beiden bei jeder der Phasen vorgesehenen Kapselungselemente 31, 32; 41, 42; 51, 52 als einstückiges Kapselungselement ausgebildet sein. Dieses Element enthält dann sowohl den Generatorschalter und das weitere Schaltgerät oder die Schaltgerätekombination als auch die Zusatzkomponenten. Je nach Anforderung kann die Reihenfolge der Teilschaltsysteme auch umgekehrt sein.

Die Kapselungselemente, z.B. 51, 52, enthalten jeweils ein auf einem Tragrahmen 6 ruhendes unteres Kapselungsteil, z.B. 511, 521, mit zwei Öffnungen zum Anschluss des in einer zylinderförmigen Kapselung, z.B. 13, der Generatorableitung 2 auf der Zylinderachse angeordneten Phasenleiters, z.B. L₃, sowie eine mit dem unteren Kapselungsteil, z.B. 511, 521, lösbar verbundene Abdeckung, z.B. 512, 522. Alle Komponenten des Schaltsystems 1, wie der Generatorschalter, das weitere Schaltgerät oder die Schaltgerätekombination mit mindestens zwei Schaltstellen und die Zusatzkomponenten, sind in den unteren Kapselungsteilen, z.B. 511, 521, montiert und sind nach Öffnen der Abdeckungen, z.B. 512, 522, zu Revisions- und Montagezwecken leicht zugänglich. Die transformatorseitig angeordneten Kapselungsteile, z.B. 521, weisen auf der nicht dargestellten Rückseite eine weitere Öffnung zur Durchführung einer Stromzuführung einer ausserhalb der Kapselung angeordneten und nicht dargestellten Vorrichtung zum Anfahren und/oder Bremsen des Generators auf.

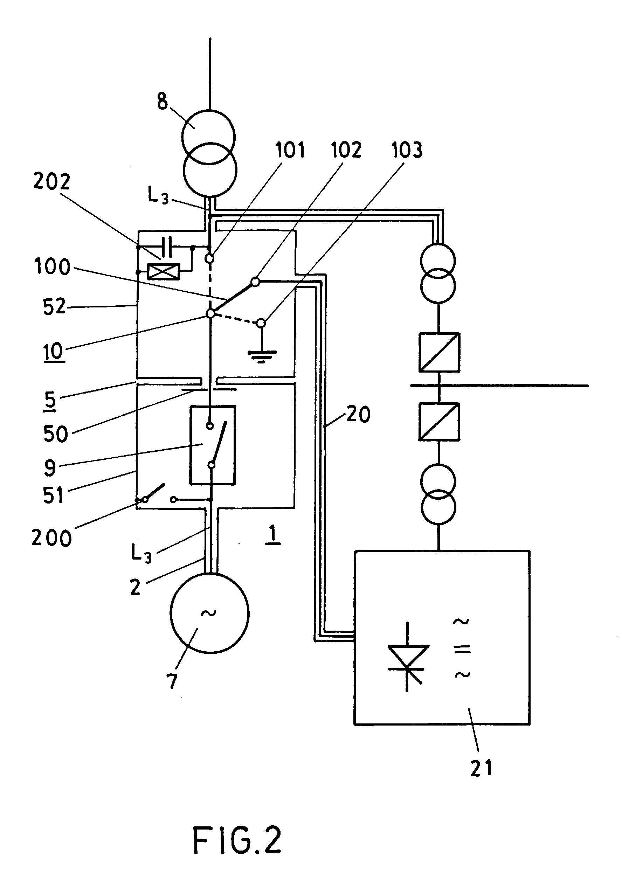

In Fig.2 ist in einphasiger Darstellung, bezogen auf den Phasenleiter L₃, die Anordnung des Schaltsystems 1 in einer Generatoranordnung dargestellt. Hieraus ist zu ersehen, dass die Kapselung 5 des Schaltfeldes 1 mit den beiden Kapselungselementen 51, 52 zwischen einem Generator 7 und einem Netztransformator 8 angeordnet ist. Der im Zuge der Generatorableitung 2 in das Kapselungselement 51 geführte Phasenleiter L₃ ist mit einem Stromanschluss eines im Kapselungselement 51 vorgesehenen Generatorschalters 9 elektrisch leitend verbunden. Ein zweiter Stromanschluss des Generatorschalters 9 ist im Zuge des weitergeführten Phasenleiters L₃ in elektrisch leitender Weise mit einem beweglichen Kontakt 100 eines eines im Kapselungselement 52 vorgesehenen Dreistellungs-Trennschalters 10 verbunden. Der Dreistellungs-Trennschalter 10 enthält neben dem beweglichen Kontakt 100 drei feststehende Kontakte 101, 102 und 103, welche der Reihe nach elektrisch leitend verbunden sind mit einem zum Netztransformator 8 geführten Abschnitt des Phasenleiters L₃, mit einem Stromanschluss 20 einer vom Netz gespeisten Anfahrvorrichtung 21 und mit Masse des Schaltsystems 1 oder mit Erde oder einem isolierten Kurzschluss. In den Kapselungselementen 51, 52 ist noch ausreichend Raum vorhanden zur Anordnung weiterer Zusatzkomponenten 201, 202, wie weitere Schaltgeräte, Strom- und Spannungswandler, Ableiter und/oder Schutzkondensatoren. Zu Zwecken eines erhöhten Berührungsschutzes während Wartungsarbeiten im Kapselungselement 52 ist im Kapselungselement 51 eine Isolierbarriere 50 vorgesehen.

Diese Generatoranordnung wirkt nun wie folgt:

Der Dreistellungs-Trennschalter 10 weist drei Schaltstellen auf, von denen zwei geöffnet und eine dritte geschlossen ist.
(1) Bei einer Revision der Anordnung sind eine vom beweglichen Kontakt 100 und dem feststehenden Kontakt 101 gebildete erste und eine vom beweglichen Kontakt 100 und dem feststehenden Kontakt 102 gebildete zweite Schaltstelle geöffnet. Eine vom beweglichen Kontakt 100 und vom feststehenden Kontakt 103 gebildete dritte Schaltstelle ist dann geschlossen. Der Generator 7 ist vom Netztransformator 8 und der Anfahrvorrichtung 21 getrennt und der mit dem beweglichen Kontakt 100 des Dreistellungs-Trennschalters 10 verbundene Abschnitt des Phasenleiters L₃ ist dann geerdet (in Fig. 2 gestrichelt dargestellte Position des Dreistellungs-Trennschalters 10). Zwischen den Kapselungselementen 51 und 52 wirkt zum Zwecke des Personenschutzes die Isolierbarriere 50.
(2) Zum Hochfahren des Generators 7 wird bei geöffnetem Generatorschalter 9 zunächst die dritte Schaltstelle geöffnet und die zweite Schaltstelle geschlossen (in Fig.2 durchgezogen dargestellte Position des Dreistellungs-Trennschalters 10). Der Generator 7 ist nach wie vor vom Netztransformator 8 getrennt. Durch Einschalten des Generatorschalters 9 wird nun eine Verbindung zwischen Generator 7 und einem Frequenzumrichter oder einer "back-to-back"-Anfahrmaschine der Anfahrvorrichtung 21 hergestellt. Der Generator 7 wird durch entsprechende Steuerung der Anfahrvorrichtung 21 hochgefahren.
(3) Sobald der Generator 7 eine zur synchronen Anschaltung an das Netz ausreichende Drehzahl erreicht hat oder ohne Fremdeinspeisung weiter beschleunigen kann, wird die Anfahrvorrichtung 21 durch Öffnen des Generatorschalters 9 vom Generator 7 getrennt (in Fig.2 durchgezogen dargestellte Position des Dreistellungs-Trennschalters 10).
(4) Anschliessend wird die zweite Schaltstelle geöffnet und die erste Schaltstelle geschlossen. Der Generatorschalter 9 ist nun einseitig mit dem Netztransformator 8 verbunden (in Fig.2 punktiert dargestellte Position des Dreistellungs-Trennschalters 10).
(5) Durch Schliessen des Generatorschalters 9 wird der hochgefahrene Generator 7 sodann synchron an das Netz geschaltet und speist über den Generatorschalter 9 und die erste Schaltstelle des Dreistellungs-Trennschalters 10 in den Netztransformator 8 ein.
(6) Durch entsprechend angepasste Betätigung des Schaltsystems 1 kann bei Bedarf der Generator 7 abgebremst werden. Zu diesem Zweck wird der von Generator 7 abgegebene Strom über den geschlossenen Generatorschalter 9 und den Dreistellungs-Trennschalter 10 an den als isolierter Kurzschluss wirkenden und als Sternpunkt der drei Phasenleiter ausgebildeten feststehende Kontakt 103 geführt.

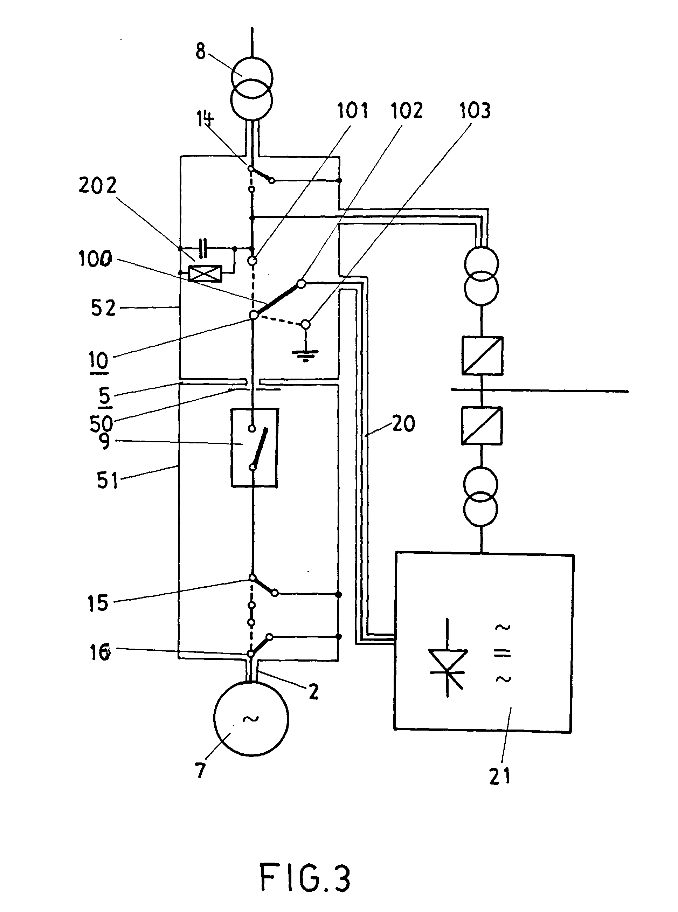

Bei der in Fig.3 dargestellten alternativen Ausführungsform des Schaltsystems 1 nach der Erfindung sind im Zuge der Generatorableitung 2 in der Kapselungen 5 neben dem Dreistellungs-Trennschalter 10 oder einer entsprechend wirkenden Schaltgerätekombination und dem Generatorschalter 9 drei vorzugsweise als Zweistellungs-Trennschalter ausgebildete Schaltgeräte 14, 15, 16 angeordnet. Diese Schaltgeräte 14, 15, 16 können jeweils alternativ als Durchgangstrenner oder als Erder wirken. Hierdurch wird zusätzlich erreicht, dass beliebige Komponenten der Generatoranordnung, wie Generator 7, Netztransformator 8 oder Generatorschalter 9, unabhängig voneinander gewartet werden können. Je nach Anforderung an die Generatoranordnung kann die Anzahl der Schaltgeräte 14, 15, 16 erhöht oder reduziert werden.

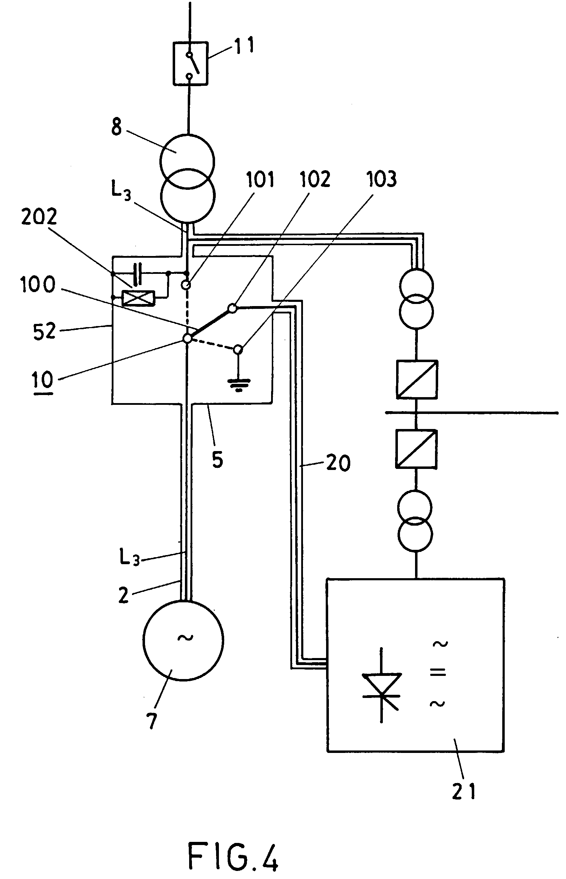

Bei der in Fig.4 dargestellten dritten Ausführungsform des Schaltsystems 1 nach der Erfindung weist der Dreistellungs-Trennschalter 10 oder eine entsprechend wirkende Schaltgerätekombination einen beweglichen Kontakt 100 auf, der ohne Zwischenschaltung eines Generatorschalters 9 unmittelbar auf den Generator 7 wirkt. Bei dieser Ausführungsform der Erfindung wird ebenfalls ein zusätzlicher Trennschalter beim Betrieb der Anfahrvorrichtung 21 eingespart, da der Dreistellungs-Trennschalter 10 folgende Funktionen übernehmen kann: die Wirkung als Durchgangstrenner für den Phasenleiter L₃, das Führen des Stroms von der Anfahrvorrichtung 21 an den Generator 7, und gegebenenfalls
das Erden und/oder Kurzschliessen der Wicklungen des Generators 7 beim Bremsen.

Die Funktion des Generatorschalters 9 wird hierbei von einem dem Netztransformator 8 nachgeschalteten Hochspannungsschalter 11 übernommen, welcher den Netz transformator 8 und damit den Generator 7 ans Netz schaltet oder davon trennt.

### BEZEICHNUNGSLISTE

- 1: Schaltsystem
- 2: Generatorableitung
- 3, 4, 5: Kapselungen
- 6: Tragrahmen
- 7: Generator
- 8: Netztransformator
- 9: Generatorschalter
- 10: Dreistellungs-Trennschalter
- 11: Hochspannunsschalter
- 13: Kapselung
- 14, 15, 16: Schaltgeräte
- 20: Stromanschluss
- 21: Anfahrvorrichtung
- 31, 32, 41,: Kapselungselemente
- 42, 51, 52 50: Isolierbarriere
- 100: beweglicher Kontakt
- 101, 102, 103: feststehende Kontakte
- 201, 202: Zusatzkomponenten
- 511, 521: Kapselungsteile
- 512, 522: Abdeckungen
- L₁, L₂, L₃: Phasenleiter

## Patentansprüche

1. Mehrphasiges Schaltsystem (1), bei dem jeder (z.B. L₃) der Phasenleiter (L₁, L₂, L₃) im Zuge einer zwischen einem Generator (7) und einem Netztransformator (8) angeordneten Generatorableitung (2) gemeinsam mit einem ersten Schaltgerät oder einer ersten Schaltgerätekombination von den übrigen Phasenleitern (z.B. L₁, L₂) phasenisoliert in einer Kapselung (3, 4, 5) angeordnet ist, dadurch gekennzeichnet, dass das erste Schaltgerät oder die erste Schaltgerätekombination mindestens zwei Schaltstellen aufweist, von denen eine erste zwischen dem Generator (7) und einem auf den Netztransformator (8) wirkenden Ausgang des Schaltsystems (1) und eine zweite zwischen dem Generator (7) und einer ausserhalb der Kapselung (z.B. 5) angeordneten und bei geöffneter erster und geschlossener zweiter Schaltstelle mit dem Generator (7) in Wirkverbindung bringbaren Anfahrvorrichtung (21) liegt.

2. Schaltsystem nach Anspruch 1, dadurch gekennzeichnet, dass im Zuge jedes (z.B. L₃) der Phasenleiter (L₁, L₂, L₃) neben dem ersten Schaltgerät oder der ersten Schaltgerätekombination zusätzlich ein in der Kapselung (3, 4, 5) angeordneter Generatorschalter (9) vorgesehen ist, über den bei geschlossener erster Schaltstelle der Netztransformator (8) und bei geschlossener zweiter Schaltstelle die Anfahrvorrichtung (21) mit dem Generator (7) in Wirkverbindung bringbar ist.

3. Schaltsystem nach Anspruch 2, dadurch gekennzeichnet, dass im Zuge der Generatorableitung (2) neben dem ersten Schaltgerät oder der ersten Schaltgerätekombination und dem Generatorschalter (9) ein zweites Schaltgerät oder eine zweite Schaltgerätekombination angeordnet ist.

4. Schaltsystem nach einem der Ansprüch 1 bis 3, dadurch gekennzeichnet, dass das erste Schaltgerät eine zwischen dem Generator (7) und Masse oder Erde oder einem isolierten Kurzschluss angeordnete dritte Schaltstelle aufweist.

5. Schaltsystem nach Anspruch 4, dadurch gekennzeichnet, dass das erste Schaltgerät als Dreistellungs-Trennschalter (10) mit einem mit dem Phasenleiter (z.B. L₃) elektrisch leitend verbundenen, beweglichen (100) und drei feststehenden (101, 102, 103) Kontaktstücken ausgebildet ist.

6. Schaltsystem nach Anspruch 5, dadurch gekennzeichnet, dass der bewegliche Kontakt (100) des Dreistellungs-Trennschalters (10) mit einem mit dem Phasenleiter (z.B. L₃) elektrisch leitend verbundenen feststehenden Kontakt (101) die erste, mit einem mit einem Stromanschluss (20) der Anfahrvorrichtung (21) elektrisch leitend verbundenen feststehenden Kontakt (102) die zweite und mit einem mit Erde oder Masse des Schaltsystems (1) oder einem isoliert angeordneten Kurzschluss elektrisch leitend verbundenen feststehenden Kontakt (103) die dritte Schaltstelle bildet.

7. Schaltsystem nach einem der Ansprüche 5 oder 6, dadurch gekennzeichnet, dass das Schaltsystem (1) aus zwei Teilschaltsystemen besteht, von denen ein erstes Teilschaltsystem mindestens den Generatorschalter (9) und ein zweites Teilschaltsystem mindestens den Dreistellungs-Trennschalter (10) umfasst.

8. Schaltsystem nach Anspruch 7, dadurch gekennzeichnet, dass die Kapselung des zweiten Teilschaltsystems einen Stromanschluss (20) der Anfahrvorrichtung (21) aufweist.

9. Schaltsystem nach einem der Ansprüche 1 bis 8, dadurch gekennzeichnet, dass die Kapselung (z.B. 5) des Schaltsystems oder jedes der Teilschaltsysteme als kastenförmiges und rückstromführendes Kapselungselement (31, 32; 41, 42; 51, 52) ausgebildet ist.

10. Schaltsystem nach Anspruch 9, dadurch gekennzeichnet, dass das Kapselungselement (31, 32; 41, 42; 51, 52) gebildet ist von einem auf einem Tragrahmen (6) ruhenden und zwei Öffnungen zum Anschluss des Phasenleiters (z.B. L₃) enthaltenden Kapselungsteil (511, 521) sowie von einer mit dem Kapselungsteil (511, 521) lösbar verbundenen und rückstromführenden Abdeckung (512, 522).

11. Schaltsystem nach einem der Ansprüche 1 bis 10, dadurch gekennzeichnet, dass die Kapselung (z.B. 5) neben dem ersten Schaltgerät oder der ersten Schaltgerätekombination mindestens eine Zusatzkomponente (201, 202), wie Trenn- und/oder Erdungsschalter, Strom- und/oder Spannungswandler, Ableiter und/oder Schutzkondensatoren, aufweist.

12. Generatoranordnung mit einem Schaltsystem nach Anspruch 1 und mit einer Vorrichtung (21) zum Anfahren eines vorzugsweise in einer Gasturbinen- oder Wasserkraftanlage vorgesehenen Generators (7), dadurch gekennzeichnet, dass ein erster Stromanschluss der Anfahrvorrichtung (21) mit dem Netz in Wirkverbindung steht, und dass ein zweiter Stromanschluss (20) der Anfahrvorrichtung (21) über das erste Schaltgerät oder die erste Schaltgerätekombination mit dem Generator (7) in Wirkverbindung bringbar ist.

13. Generatoranordnung nach Anspruch 12, dadurch gekennzeichnet, dass erste Schaltgerät mindestens zwei einen gemeinsamen beweglichen (100) und jeweils einen von zwei feststehenden Kontakten (101, 102) aufweisende Schaltstellen enthält, von denen eine erste im Zuge des Phasenleiters (z.B. L₃) und eine zweite im Zuge des zweiten Stromanschlusses (20) angeordnet ist.

14. Generatoranordnung nach Anspruch 13, dadurch gekennzeichnet, dass zwischen erstem Schaltgerät und Generator (7) ein Generatorschalter (9) angeordnet ist, und dass das erste Schaltgerät eine vom beweglichen (100) und einem dritten feststehenden Kontakt (103) gebildete dritte Schaltstelle aufweist, über welche der Generator (7) bei geschlossenem Generatorschalter (9) und bei geöffneter erster und zweiter Schaltstelle in Wirkverbindung mit Erde oder Masse des Schaltsystems (1) oder einen isolierten Kurzschluss bringbar ist.

## Claims

1. Multiphase switching system (1) in which each (e.g. L₃) of the phase conductors (L₁, L₂, L₃) is arranged in encapsulation (3, 4, 5), insulated in terms of the phase from the other phase conductors (e.g. L₁, L₂), in the course of a generator output line (2), which is arranged between a generator (7) and a network transformer (8), together with a first switching apparatus or a first switching apparatus combination, characterized in that the first switching apparatus or the first switching apparatus combination has at least two switching positions, a first of which is arranged between the generator (7) and an output of the switching system (1) acting on the network transformer (8), and a second of which is arranged between the generator (7) and a starting device (21) which is arranged outside the encapsulation (e.g. 5) and can be brought into effective connection with the generator (7) when the first switching position is open and the second switching position is closed.

2. Switching system according to Claim 1, characterized in that, provided in the course of each (e.g. L₃) of the phase conductors (L₁, L₂, L₃) in addition to the first switching apparatus or the first switching apparatus combination, there is additionally a generator switch (9), which is arranged in the encapsulation (3, 4, 5) and via which the network transformer (8) can be brought into effective connection with the generator when the first switching point is closed, and the starting device (21) can be brought into effective connection with the generator (7) when the second switching point is closed.

3. Switching system according to Claim 2, characterized in that, arranged in the course of the generator output line (2), in addition to the first switching apparatus or the first switching apparatus combination and the generator switch (9), there is a second switching apparatus or a second switching apparatus combination.

4. Switching system according to one of Claims 1 to 3, characterized in that the first switching apparatus has a third switching position, which is arranged between the generator (7) and frame or earth or an insulated short-circuit.

5. Switching system according to Claim 4, characterized in that the first switching apparatus is constructed as a three-position interrupter switch (10) having one moving contact piece (100) which is electrically conductively connected to the phase conductor (e.g. L₃), and having three stationary contact pieces (101, 102, 103).

6. Switching system according to Claim 5, characterized in that the moving contact (100) of the three-position interrupter switch (10) forms the first switching position with a stationary contact (101) which is electrically conductively connected to the phase conductor (e.g. L₃), forms the second switching position with a stationary contact (102) which is electrically conductively connected to a current connection (20) of the starting device (21), and forms the third switching point with a stationary contact (103) which is electrically conductively connected to earth or the frame of the switching system (10) or to a short-circuit which is arranged in an insulated manner.

7. Switching system according to one of Claims 5 or 6, characterized in that the switching system (1) comprises two partial switching systems, of which a first partial switching system comprises at least the generator switch (9) and a second partial switching system comprises at least the three-position interrupter switch (10).

8. Switching system according to Claim 7, characterized in that the encapsulation of the second partial switching system has a current connection (20) of the starting device (21).

9. Switching system according to one of Claims 1 to 8, characterized in that the encapsulation (e.g. 5) of the switching system or each of the partial switching systems is constructed as an encapsulation element (31, 32; 41, 42; 51, 52) which is in the form of a box and carries the return current.

10. Switching system according to Claim 9, characterized in that the encapsulation element (31, 32; 41, 42; 51, 52) is formed by an encapsulation part (511, 521) which rests on a supporting frame (6) and contains two openings for the connection of the phase conductor (e.g. L₃), as well as by a cover (512, 522) which is detachably connected to the encapsulation part (511, 521) and carries the return current.

11. Switching system according to one of Claims 1 to 10, characterized in that the encapsulation (e.g. 5) has at least one additional component (201, 202), such as interrupter and/or earthing switches, current transformers and/or voltage converters, suppressors and/or protection capacitors, in addition to the first switching apparatus or the first switching apparatus combination.

12. Generator arrangement having a switching system according to Claim 1 and having a device (21) for starting a generator (7) which is preferably provided in a gas turbine installation or a hydroelectric installation, characterized in that a first current connection of the starting device (21) is effectively connected to the network, and in that a second current connection (20) of the starting device (21) can be brought into effective connectionn with the generator (7), by the first switching apparatus or the first switching apparatus combination.

13. Generator arrangement according to Claim 12, characterized in that the first switching apparatus contains at least two switching points which have a common moving contact (100) and in each case one of two stationary contacts (101, 102), of which switching points a first is arranged in the course of the phase conductor (e.g. L₃) and a second is arranged in the course of the second current connection (20).

14. Generator arrangement according to Claim 13, characterized in that a generator switch (9) is arranged between the first switching apparatus and the generator (7), and in that the first switching apparatus has a third switching point which is formed by the moving contact (100) and by a third stationary contact (103), via which third switching point the generator (7) can be brought into effective connection with earth or the frame of the switching system (1) or an insulated short-circuit when the generator switch (9) is closed and when the first and second switching points are open.

## Revendications

1. Système de commutation à plusieurs phases (1), dans lequel chacun (par exemple L₃) des conducteurs de phase (L₁, L₂, L₃) est disposé dans un blindage (3, 4, 5) en isolation de phase par rapport aux autres conducteurs de phase (par exemple L₁, L₂), dans la ligne d'un branchement de générateur (2) disposé entre un générateur (7) et un transformateur de réseau (8) en même temps qu'avec un premier appareil de commutation ou une première combinaison d'appareils de commutation, caractérisé en ce que le premier appareil de commutation ou la première combinaison d'appareils de commutation présente au moins deux points de commutation, dont un premier est situé entre le générateur (7) et une sortie du système de commutation (1) agissant sur le transformateur de réseau (8) et un deuxième est situé entre le générateur (7) et un dispositif de démarrage (21), disposé à l'extérieur du blindage (par exemple 5), pouvant être mis en liaison active avec le générateur (7) lorsque le premier point de commutation est ouvert et que le deuxième point de commutation est fermé.

2. Système de commutation suivant la revendication 1, caractérisé en ce qu'il est en plus prévu, dans la ligne de chacun (par exemple L₃) des conducteurs de phase (L₁, L₂, L₃), à côté du premier appareil de commutation ou de la première combinaison d'appareils de commutation, un interrupteur de générateur (9) disposé dans un blindage (3, 4, 5), par lequel le transformateur de réseau (8) peut être mis en liaison active avec le générateur (7) lorsque le premier point de commutation est fermé et le dispositif de démarrage (21) peut être mis en liaison active avec le générateur (7) lorsque le deuxième point de commutation est fermé.

3. Système de commutation suivant la revendication 2, caractérisé en ce qu'un deuxième appareil de commutation ou une deuxième combinaison d'appareils de commutation est disposé dans la ligne du branchement de générateur (2), à côté du premier appareil de commutation ou de la première combinaison d'appareils de commutation.

4. Système de commutation suivant l'une quelconque des revendications 1 à 3, caractérisé en ce que le premier appareil de commutation présente un troisième point de commutation disposé entre le générateur (7) et la masse ou la terre ou un court-circuit isolé.

5. Système de commutation suivant la revendication 4, caractérisé en ce que le premier appareil de commutation est constitué par un sectionneur à trois positions (10) avec une pièce de contact mobile (100) raccordée en liaison électrique au conducteur de phase (par exemple L₃) et trois pièces de contact fixes (101, 102, 103).

6. Système de commutation suivant la revendication 5, caractérisé en ce que le contact mobile (100) du sectionneur à trois positions (10) forme avec un contact fixe (101) raccordé en liaison électrique au conducteur de phase (par exemple L₃) le premier, avec un contact fixe (102) raccordé en liaison électrique à une borne (20) du dispositif de démarrage (21) le deuxième, et avec un contact fixe (103) raccordé en liaison électrique à la terre ou à la masse du système de commutation (1) le troisième point de commutation.

7. Système de commutation suivant l'une des revendications 5 ou 6, caractérisé en ce que le système de commutation (1) se compose de deux systèmes de commutation partiels, dont un premier système de commutation partiel comprend au moins l'interrupteur de générateur (9) et un second système de commutation partiel comprend au moins le sectionneur à trois positions (10).

8. Système de commutation suivant la revendication 7, caractérisé en ce que le blindage du second système de commutation partiel présente une borne (20) du dispositif de démarrage (21).

9. Système de commutation suivant l'une quelconque des revendications 1 à 8, caractérisé en ce que le blindage (par exemple 5) du système de commutation ou celui des systèmes de commutation partiels est constitué par un élément de blindage (31, 32; 41, 42; 51, 52) en forme de boîtier et conduisant le courant de retour.

10. Système de commutation suivant la revendication 9, caractérisé en ce que l'élément de blindage (31, 32; 41, 42; 51, 52) est formé d'une partie de blindage (511, 521) reposant sur un châssis porteur (6) et comportant deux ouvertures pour le raccordement du conducteur de phase (par exemple L₃) ainsi que d'un couvercle (512, 522) assemblé de façon amovible à la partie de blindage (511, 521) et conduisant le courant de retour.

11. Système de commutation suivant l'une quelconque des revendications 1 à 10, caractérisé en ce que le blindage (par exemple 5) présente, à côté du premier appareil de commutation ou de la première combinaison d'appareils de commutation, au moins un composant additionnel (201, 202), comme des sectionneurs et/ou des interrupteurs de mise à la terre, des transformateurs de courant et/ou de tension, des parafoudres et/ou des condensateurs de protection.

12. Agencement de générateur avec un système de commutation suivant la revendication 1 et avec un dispositif (21) pour faire démarrer un générateur (7) prévu de préférence dans une installation de turbine à gaz ou de centrale hydroélectrique, caractérisé en ce qu'une première borne du dispositif de démarrage (21) se trouve en liaison active avec le réseau et en ce qu'une seconde borne (20) du dispositif de démarrage (21) peut être mise en liaison active avec le générateur (7) par le premier appareil de commutation ou par la première combinaison d'appareils de commutation.

13. Agencement de générateur suivant la revendication 12, caractérisé en ce que le premier appareil de commutation comporte au moins deux points de commutation présentant un contact mobile commun (100) et chacun un des deux contacts fixes (101, 102), dont un premier est disposé dans la ligne du conducteur de phase (par exemple L₃) et un second dans la ligne de la seconde borne (20).

14. Agencement de générateur suivant la revendication 13, caractérisé en ce qu'un interrupteur de générateur (9) est disposé entre le premier appareil de commutation et le générateur (7), et en ce que le premier appareil de commutation présente un troisième point de commutation formé par le contact mobile (100) et un troisième contact fixe (103), par lequel le générateur (7) peut être mis en liaison active avec la terre ou avec la masse du système de commutation (1) ou avec un court-circuit isolé, avec l'interrupteur de générateur (9) fermé et les premier et deuxième points de commutation ouverts.
